# EUROPÄISCHE PATENTSCHRIFT

(11) **EP 3 265 658 B1**
(45) Veröffentlichungstag und Bekanntmachung des Hinweises auf die Patenterteilung: **08.08.2018**
(21) Anmeldenummer: 16766567.8
(22) Anmeldetag: 19.09.2016
(51) Int. Cl.: F01N 13/10, F01N 13/18, F01N 13/14

(54) **KRÜMMER**
MANIFOLD
COLLECTEUR

(30) Priorität: 22.09.2015 DE 102015116018
(43) Veröffentlichungstag der Anmeldung: 10.01.2018
(73) Patentinhaber: Tenneco GmbH, 67480 Edenkoben (DE)
(72) Erfinder: KAUFFMANN, Steffen, 67354 Römerberg (DE); GEMINN, Markus, 67487 St. Martin (DE); STEIGERT, Andreas, 67466 Lambrecht (DE); ROTH, Margit, 67482 Freimersheim (DE)
(74) Vertreter: STT Sozietät Thews & Thews
(86) Internationale Anmeldenummer: PCT/EP2016/072109
(87) Internationale Veröffentlichungsnummer: WO 2017/050671

(56) Entgegenhaltungen:
- EP-A2- 1 914 401
- DE-A1-102011 106 242
- FR-A1- 2 947 301
- JP-A- H11 324 668

## Beschreibung

Die Erfindung bezieht sich auf ein Krümmersystem für eine Verbrennungskraftmaschine mit einem als Sammelkrümmer ausgebildeten Gehäuse mit zwei Einlassöffnungen und mit einer Auslassöffnung zur strömungstechnischen Verbindung von zwei Auslässen einer Verbrennungskraftmaschine mit einer Abgasanlage. Am Gehäuse sind maximal zwei Anschlussöffnungen zum Anschließen eines doppelschaligen inneren LSI-Krümmers.

Als LSI-Krümmer werden luftspaltisolierte Krümmer mit einer Innenschale und einer Außenschale bezeichnet, die als separates Bauteil einzeln verbaut werden können. Ein solcher separater LSI-Krümmer ist immer nur einer motorseitigen Auslassöffnung zugeordnet und bildet kein Sammelkrümmer, der mehrere motorseitige Auslassöffnungen zusammenfasst.

Als innerer LSI-Krümmer werden die LSI-Krümmer bezeichnet, die in Strömungsrichtung an das als Sammelkrümmer gebildete Gehäuse anschließen. Als äußere LSI-Krümmer werden diejenigen LSI-Krümmer bezeichnet, die in Strömungsrichtung an den jeweiligen inneren LSI-Krümmer anschließen.

Unter einer Einlassöffnung, Auslassöffnung oder Anschlussöffnung ist dabei das jeweilige Ende der Rohre oder eines Gehäuses zu verstehen, das mittels weiterer Verbindungsmittel wie beispielsweise Flanschen oder Schweißgut mit einem weiterführenden anderen Rohr oder Gehäuse verbunden ist.

Es ist bereits aus der EP 1 914 401 A2 ein als Sammelkrümmer ausgebildetes Gehäuse für eine Brennkraftmaschine mit mehreren Abgasführungen bekannt, deren eines eine Abgaseinlassöffnung aufweisendes Ende jeweils mit einem Auslass der Brennkraftmaschine verbindbar ist und deren anderes Ende jeweils mit einer eine Abgasauslassöffnung aufweisenden Sammeleinrichtung verbunden ist. Eine erste Abgasführung ist dabei vom Auslass der Brennkraftmaschine bis zur Sammeleinrichtung als Gussteil ausgebildet. An diese Sammelrichtung schließen beidseitig jeweils ein weiterer Sammelkrümmer an, über den zwei Auslässe der Brennkraftmaschine zusammengeführt werden. Die beiden Sammelkrümmer sind als LSI-Krümmer ausgebildet.

Eine von der Abgasführung identische Bauweise mit insgesamt drei Sammelkrümmern ist in der DE 101 44 015 A1 beschrieben, bei der das Mittelteil als Sammelgehäuse doppelwandig luftspaltisoliert aus Blech gebildet ist.

Die DE 39 25 802 A1 beschreibt zur Verbindung von sechs Auslässen einer Verbrennungskraftmaschine mit einer Abgasanlage ein Gussteil, das als Adapter für sechs Krümmerrohre dient.

Nach der DE 103 01 395 A1 ist ein als Sammelkrümmer ausgebildetes doppelwandiges Gehäuse bekannt, bei dem vier Anschlussöffnungen für die vier Auslässe der Brennkraftmaschine vorgesehen sind.

In der DE 10 2011 106 242 A1 ist ein System aus Einzelkrümmern beschrieben, die jeweils in der Anzahl der Auslässe der Brennkraftmaschine ineinander gesteckt sind.

Die DE 10 2014 103 804 A1 beschreibt für innen und für außen identische LSI-Krümmer.

Der vorliegenden Erfindung liegt die Aufgabe zugrunde, eine Abgasanlage derart weiterzuentwickeln, dass gleichzeitig mit einem modularen System der Klang des Abgasgeräusches und damit der Abgasanlage über mehrere wichtige Drehzahlbereiche des Verbrennungsmotors optimiert wird. Jeder durchschnittliche Motor besitzt zwischen vier und sechs Auslässe, die durch die Modularität des Systems individuell bestückt werden können. Die Geometrie des Abgassystems ist dabei gezielt auf die Akustik abgestimmt.

Gelöst wird die Aufgabe erfindungsgemäß dadurch, dass zumindest ein separater innerer LSI-Krümmer mit einer Anschlussöffnung, einer Einlassöffnung und einer Auslassöffnung vorgesehen ist, der mit der Auslassöffnung an das Gehäuse angeschossen ist und zumindest ein separater äußerer LSI-Krümmer mit einer Einlassöffnung und einer Auslassöffnung vorgesehen ist, der mit der Auslassöffnung an die Anschlussöffnung des inneren LSI-Krümmers angeschlossen ist. Alle LSI-Krümmer sind vollständig aus Blech geformt und weisen jeweils eine separate ein- oder mehrteilige Innenschale und jeweils eine ein- oder mehrteilige separate Außenschale auf. Alle inneren und alle äußeren LSI-Krümmer sind baugleich oder geometrisch identisch, wobei die inneren LSI-Krümmer nicht baugleich und nicht geometrisch identisch zu den äußeren LSI-Krümmern sind.

Als separater LSI-Krümmer-Krümmer wird ein LSI-Krümmer bezeichnet, der eine eigene Innenschale und eine eigene Außenschale aufweist. Mehrere Krümmer mit einer gemeinsamen Außen- oder Innenschale werden im Unterschied dazu nach dieser Erfindung nicht als separat bezeichnet.

Durch die unterschiedliche Geometrie zwischen innerem und äußerem Krümmer wird bei luftspaltisolierten Krümmern ein vorteilhaftes Resonanzverhalten erzeugt. Insbesondere wurde festgestellt, dass Reflektionsflächen, die senkrecht zur Strömungsrichtung ausgerichtet sind, das Resonanzverhalten nachteilig beeinflussen, weshalb der äußere LSI-Krümmer in seiner gegenüber dem inneren LSI-Krümmer abweichenden Geometrie von seiner Einlassöffnung zur Auslassöffnung gebogen ist.

Der innere LSI-Krümmer ist mit seiner Auslassöffnung unmittelbar an den Sammelkrümmer angeschlossen und über seine Anschlussöffnung mit der Auslassöffnung eines äußeren LSI-Krümmers verbunden. Dadurch lassen sich beidseitig an einem Sammelkrümmer sowohl nur ein LSI-Krümmer als auch beidseitig zwei LSI-Krümmer anschließen. Das Krümmersystem mit zwei Blechkrümmern für eine 4-Zylinder-Brennkraftmaschine kann um zwei weitere gleiche Blechkrümmer ergänzt zu einem Krümmersystem für eine 6-Zylinder-Brennkraftmaschine erweitert werden. Die das Abgas leitenden Anschlussöffnungen, die Einlassöffnung und die Auslassöffnung werden durch die Innenschale gebildet.

Besonders vorteilhaft wirkt sich die unterschiedliche Geometrie aus, wenn am Gehäuse das Maß eines Abstandes A2 zwischen einer der beiden Einlassöffnungen und der Auslassöffnung zwischen 30 mm und 300 mm oder zwischen 50 mm und 120 mm beträgt. Die vorteilhafte Akustik wird durch die bei solchen Anwendungen maßgeblichen Frequenzen und/oder deren Harmonischen verschiedenster Ordnungen beeinflusst. Die Wellenlänge der maßgeblichen Frequenzen und/oder deren Harmonischen korreliert als maßgeblicher Faktor mit den beanspruchten Abständen. Eine streng mathematisch oder physikalisch ableitbare Beziehung zwischen den Abständen und den Harmonischen konnte zwar nicht ermittelt werden, jedoch konnten die Vorteile durch mehrere und teilweise komplexe Versuchsreihen ermittelt werden.

Durch die unterschiedliche Geometrie der an den Sammelkrümmer anschließenden LSI-Krümmer gegenüber den an das Gehäuse anschließenden LSI-Krümmern, wird insbesondere bei 6-Zylinder-Reihenmotoren eine Akustik zwischen dem Auslass und dem Sammelrohr erreicht, die gegenüber bekannten Krümmersystemen harmonischer klingt. Diese Verbesserung wirkt sich besonders vorteilhaft aus, wenn ein bestimmtes Maß eines Abstandes A2 zwischen einer der beiden Einlassöffnungen und der Auslassöffnung gegeben ist, das je nach Modell des Krümmersystems zwischen 50 mm und 120 mm variiert. Dabei wurde festgestellt, dass bei kleineren Abständen mit dem Vorteil einer geringen Baugröße das Klangverhalten schon mit geringfügigen Änderungen der Abstände extrem beeinflusst wird. Eine Vergrößerung des Abstandes hingegen bewirkt vorteilhafte Klangeigenschaften.

Bevorzugt werden solche Krümmersysteme bei Lkw-Dieselmaschinen oder stationären Dieselmotoren eingesetzt, bei denen an den Sammelkrümmer anschließend ein Turbolader angeordnet ist. Das als zentrales und tragendes Teil ausgebildete Gehäuse stellt die notwendige Statik für die Verbindung des Turboladers mit den Auslässen am Motorgehäuse dar.

Hierzu ist es besonders vorteilhaft, wenn der Abstand in Abhängigkeit von Schallwellen des Abgases dimensioniert ist, deren Schallwellenlänge sich durch n*A2 oder 1/n*A2 berechnet, wobei n ein Element der natürlichen Zahlen, jedoch nicht Null ist. Dabei ist A2 das vorstehend beschriebene Maß für den Abstand zwischen einer der beiden Einlassöffnungen und der Auslassöffnung. L ist die mittlere physikalische Schallwellenlänge, welche sich aus dem Quotient von Ausbreitungsgeschwindigkeit C [m/s = Meter/Sekunde] des Schalls im Abgas zur Frequenz f [1/s = 1/Sekunde = Herz] der Welle berechnet. Bei einer Abgastemperatur von 700 °C und einer Frequenz von 300 Herz [Hz] ergibt sich eine Wellenlänge von ca. 750 mm. Dieses Signal mit 300 Hz wird beispielsweise von einer 6-Zylinder Maschine bei 3000 Umdrehungen pro Minute [U/min = rpm] erzeugt. Dieses tieffrequente Signal würde mit einem Abstand von 1/10 der Wellenlänge, also mit einem Abstand A2 von 75 mm im Gehäuse hervorgehoben werden.

Vorteilhaft kann es für die Akustik auch sein, wenn die beiden Einlassöffnungen innerhalb des Gehäuses miteinander strömungstechnisch und akustisch im Austausch stehen, wodurch die Harmonisierung weiter gesteigert wird, weil ein dynamischer Ausgleich innerhalb des Gehäuses erfolgen kann.

Dabei kann es vorteilhafterweise vorgesehen sein, dass der Sammelkrümmer beziehungsweise das Gehäuse als einteiliges Gussteil ausgebildet ist. Das Schwingungsverhalten eines Gussteils ist, soweit es die Akustik von Sammelkrümmern betrifft, im Vergleich zu der eines Blechteils sehr vorteilhaft.

Bei Gussgehäusen kann es vorteilhaft sein, wenn die beiden Einlassöffnungen im Gehäuse durch eine Kanalwand getrennt sind und durch die Kanalwand zwei Strömungskanäle gebildet sind, wobei beide Strömungskanäle an der Auslassöffnung am Ende der Kanalwand münden und die beiden Strömungskanäle über eine stromauf der Auslassöffnung in der Kanalwand vorgesehene Leckage in Form einer Öffnung oder Perforation strömungstechnisch und akustisch im Austausch stehen. Hierdurch werden die Eigenschaften einer absoluten Gruppentrennung ohne jegliche akustische und strömungsdynamische Wechselwirkung und ohne jegliches Übersprechen zwischen den beiden an die Strömungskanäle anschließenden Krümmerbereichen gekoppelt mit den Eigenschaften ohne Gruppentrennung mit voller akustischer und strömungsdynamischer Wechselwirkung. Durch die in der Kanalwand vorgesehene Öffnung oder Perforation wird die strömungsdynamische Wechselwirkung reduziert, jedoch bleibt gleichzeitig die akustische Wechselwirkung weitestgehend erhalten. Das Maß der akustischen Wechselwirkung schwankt dabei sowohl mit dem Abstand zwischen einer der beiden Einlassöffnungen und der Auslassöffnung als auch mit der Drehzahl, weil je nach Größe der Öffnung als Zwangsleckage die Wechselwirkung mit steigender Drehzahl abnimmt.

Von besonderer Bedeutung kann für die vorliegende Erfindung sein, wenn der Sammelkrümmer aus einem niedrig legierten Grauguss mit einem Kohlenstoffgehalt von mindestens 1,00 Massen-% und weiteren Legierungszusätzen mit einem jeweiligen mittleren Gehalt von maximal 50,00 Massen-% gebildet ist. Solche als Grauguss bezeichneten Werkstoffe haben ein vorteilhaftes akustisches Schwingungsverhalten.

Vorteilhaft kann es auch sein, wenn die Öffnung oder die Perforation einen Gesamtquerschnitt zwischen 4 mm² und 500 mm² aufweist. Für ein vorteilhaftes Resonanzverhalten ist die Leckage abhängig vom jeweiligen Rohrquerschnitt.

Alternativ kann es von Vorteil sein, wenn das Gehäuse vollständig aus Blech geformt, doppelwandig sowie luftspaltisoliert mit einem ein- oder mehrteiligen Außengehäuse und einem ein- oder mehrteiligen Innengehäuse ausgebildet ist. Die akustischen Nachteile des Blechmaterials können durch eine besondere Formgebung des Außengehäuses kompensiert werden. Gleichzeitig können die Gehäuse einteilig aus Klappschalen oder mehrteilig aus einer Ober- und einer Unterschale gebildet sein.

Bei Blechgehäusen ist es vorteilhaft, wenn das Innengehäuse an der Anschlussöffnung mit der Innenschale des inneren LSI-Krümmers an der Auslassöffnung des inneren LSI-Krümmers zusammengesteckt ist und dabei zwischen dem Innengehäuse und der Innenschale eine Leckage in Form eines Fügespalts mit einer mittleren Breite zwischen 0,4 mm und 1,2 mm gebildet ist.

Vorteilhaft ist es auch, wenn die äußeren LSI-Krümmer keine Anschlussöffnung aufweisen und bogenförmig ausgebildet sind. Dadurch werden Reflexionsflächen vermieden, die rechtwinklig zur Strömungsrichtung verlaufen.

Ferner kann es vorteilhaft sein, wenn der innere LSI-Krümmer mit dem Gehäuse stoffschlüssig durch Schweißen oder Löten oder Kleben verbunden ist. Insbesondere die Schweißverbindung bei einem Sammelkrümmer aus Grauguss bietet eine sehr einfache und kostengünstige Herstellungsmethode. Es kann aus Gründen einer flexiblen Montage auch vorteilhaft sein, dass der LSI-Krümmer mit dem Sammelkrümmer formschlüssig mit einer Überwurfmutter oder mit einer V-Band-Schelle oder mit einer Flanschverbindung oder mit einem Spannelement verbunden ist.

Weiter kann es von Vorteil sein, wenn das Gehäuse nur eine Anschlussöffnung aufweist, über die mittel- oder unmittelbar zwei LSI-Krümmer angeschlossen sind. Diese unsymmetrische Bauweise hat bei besonderen Anwendungen akustische Vorteile gegenüber der symmetrischen Bauweise.

Schließlich kann es von Vorteil sein, wenn das Gehäuse die Auslassöffnungen mit einem Gehäuse eines Turboladers verbindet und hierzu ein zwischen dem Motorblock und dem Turbolader angeordnetes tragendes Bauteil bildet.

Weitere Vorteile und Einzelheiten der Erfindung sind in den Patentansprüchen und in der Beschreibung erläutert und in den Figuren dargestellt. Es zeigt:
- Figur 1a: eine Schnittansicht eines als Sammelkrümmer ausgebildeten Gehäuses mit in Wechselwirkung stehenden Strömungskanälen;
- Figur 1b: eine Seitenansicht des Sammelkrümmers gemäß Figur 1a;
- Figur 2: eine Schnittansicht eines Krümmersystems mit einem Sammelkrümmer mit in Wechselwirkung stehenden Strömungskanälen und zwei inneren sowie zwei äußeren LSI-Krümmern;
- Figur 3: eine Schnittansicht eines Krümmersystems mit einem Sammelkrümmer mit in Wechselwirkung stehenden Strömungskanälen mit einem inneren und einem äußeren LSI-Krümmer;
- Figur 4: einen Sammelkrümmer, doppelwandig aus Blech;
- Figur 5: eine Schnittansicht einer Flanschverbindung zwischen Sammelkrümmer und LSI-Krümmer;
- Figur 6: eine Schnittansicht einer Verbindung zwischen Sammelkrümmer und LSI-Krümmer über ein Inlay im Sammelkrümmer;
- Figur 7a: eine Ansicht eines Sammelkrümmers mit beidseitig angeordneter V-Band-Schelle;
- Figur 7b: eine Schnittansicht einer V-Band-Schellen-Verbindung zwischen Sammelkrümmer und LSI-Krümmer;
- Figur 8a: eine schematische Darstellung des Abstandes zwischen einer jeweiligen Einlassöffnung und der Auslassöffnung bei einem Sammelkrümmer in einer Ansicht von oben;
- Figur 8b: eine schematische Darstellung des Abstandes zwischen einer jeweiligen Einlassöffnung und der Auslassöffnung bei einem Sammelkrümmer in einer Seitenansicht.

Nach allen Ausführungsbeispielen ist ein Gehäuse 2 vorgesehen, mit zwei Einlassöffnungen 20, 21 zum Anschließen des Gehäuses 2 an nicht dargestellte Auslässe einer Brennkraftmaschine sowie ein bis zwei Anschlussöffnungen 22, 23 zum Anschließen jeweils eines LSI-Krümmers (30-31). Im Sinne der Zylinderreihenfolge einer Brennkraftmaschine mit inneren und äußeren Zylindern sind die jeweils "inneren" LSI-Krümmer 31, 32 zwischen dem Gehäuse 2 und einem äußeren LSI-Krümmer 30, 33 und die "äußeren" LSI-Krümmer 30, 33 gegenüberliegend zum Gehäuse 2 am jeweiligen inneren LSI-Krümmer 31, 32 angeordnet.

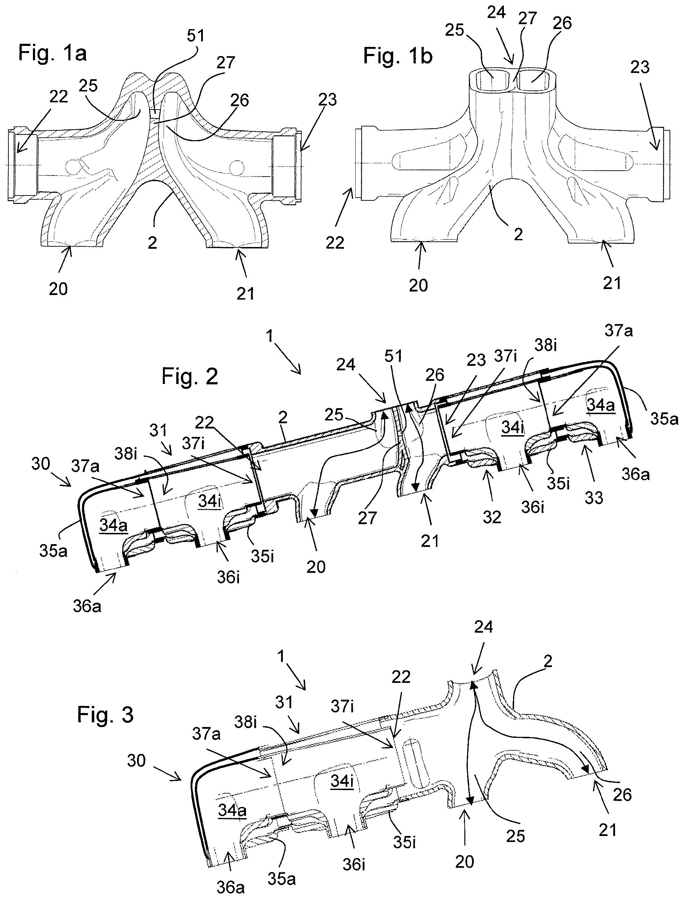

In Figur 1a ist eine Schnittansicht eines als Sammelkrümmer ausgebildeten Gehäuses 2 mit in Wechselwirkung stehenden Strömungskanälen 25, 26 dargestellt. Das Gehäuse 2 ist aus einem Grauguss gebildet und weist neben den beiden Einlassöffnungen 20, 21 zum Anschließen des Gehäuses 2 an nicht dargestellte Auslässe einer Brennkraftmaschine zudem zwei Anschlussöffnungen 22, 23 für jeweils einen inneren LSI-Krümmer 31, 32 auf. Von den beiden Einlassöffnungen 20, 21 erstrecken sich zwei nebeneinander angeordnete und über eine Kanalwand 27 teilweise getrennte Strömungskanäle 25, 26 innerhalb des Gehäuses 2 bis zu einer in Figur 1b dargestellten Auslassöffnung 24 des Gehäuses 2. Zur Verbesserung der akustischen Eigenschaften des Sammelkrümmers 2 stehen die beiden Strömungskanäle 25, 26 über eine als Öffnung 51 gebildete Leckage in der Kanalwand 27 miteinander in Wechselwirkung, was ein sogenanntes Übersprechen ermöglicht.

Bei dem in Figur 2 dargestellten Ausführungsbeispiel eines Krümmersystems 1 ist das Gehäuse 2 nicht symmetrisch aufgebaut, weist jedoch ebenso wie das Ausführungsbeispiel nach den Figuren 1a und 1b neben den beiden Einlassöffnungen 20, 21 zwei Anschlussöffnungen 23 für jeweils einen inneren LSI-Krümmer 31, 32 auf. An den jeweiligen inneren LSI-Krümmer 31, 32 schließt an dessen Anschlussöffnung 38i ein äußerer LSI-Krümmer 30, 33 mit seiner Auslassöffnung 37a an. Die inneren LSI-Krümmer 31, 32 sind alle geometrisch identisch T-förmig mit drei Öffnungen 36i, 37i, 38i ausgebildet. Die äußeren LSI-Krümmer 30, 33 sind zueinander geometrisch identisch bogenförmig mit nur zwei Öffnungen 36a, 37a ausgebildet.

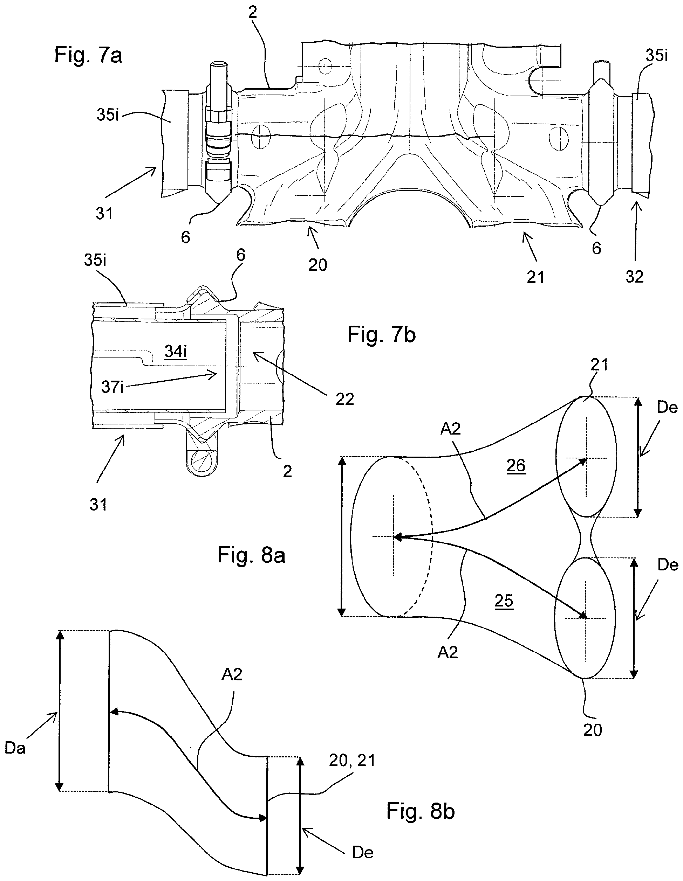

Von den beiden Einlassöffnungen 20, 21 des Gehäuses 2 erstrecken sich zwei Strömungskanäle 25, 26 innerhalb des Gehäuses 2 bis zu der Auslassöffnung 24 des Gehäuses 2. Die beiden Strömungskanäle 25, 26 sind auch hier teilweise durch eine Kanalwand 27 in ihrer Wechselwirkung getrennt. Die mit Pfeilen dargestellte mittlere Länge der beiden Strömungskanäle 25, 26 entspricht einem zu den Figuren 8a und 8b näher beschriebenen Abstand A2 zwischen der jeweiligen Einlassöffnung 20, 21 und der Auslassöffnung 24. In diesem Ausführungsbeispiel unterscheiden sich die Abstände A2 um den Faktor 1,6.

In Figur 3 ist ein Gehäuse 2 für ein Krümmersystem 1 für eine Brennkraftmaschine mit vier in Reihe angeordneten Zylindern dargestellt. Das Gehäuse 2 weist nur eine Anschlussöffnung 22 für einen inneren LSI-Krümmer 31 mit T-förmiger Geometrie auf. An diesen inneren LSI-Krümmer 31 schließt ein äußerer bogenförmiger LSI-Krümmer 30 an. Bei diesem Gehäuse 2 ist keine Minderung der Wechselwirkung zwischen den beiden Strömungskanälen 25, 26 durch eine Kanalwand 27 vorgesehen.

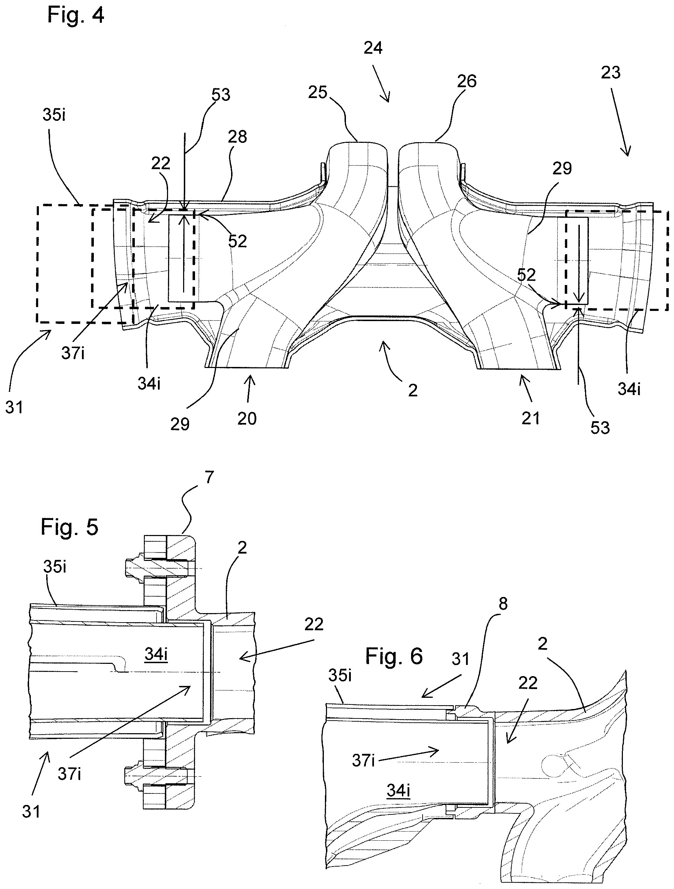

In Figur 4 ist ein luftspaltisoliertes Gehäuse 2 dargestellt, das als Sammelkrümmer ausgebildet ist. Das Gehäuse 2 weist ein Außengehäuse 28 und zwei im Außengehäuse 28 integrierte Innengehäuse 29 auf. Das Gehäuse 2 ist als tragendes Bauteil ausgebildet und verbindet die Auslässe des nicht dargestellten Motorblocks mit einem nicht dargestellten Gehäuse eines Turboladers. An das Gehäuse 2 schließen beidseitig nicht dargestellte innere LSI-Krümmer an, die keine tragende oder statisch relevante Funktion haben.

Alle LSI-Krümmer 30 weisen als luftspaltisolierte Krümmer eine Innenschale 34i, 34a und eine die Innenschale 34i, 34a umgebende Außenschale 35i, 35a auf. Zumindest an den jeweiligen Einlassöffnungen 36i, 36a schließen die jeweilige Innenschale 34i, 34a und die jeweilige Außenschale 35i, 35a in einer der Strömungsrichtungen bündig miteinander ab.

Durch die Steckverbindung zwischen den Innenschalen 34i der anschließenden inneren LSI-Krümmern 31, 32 und dem Innengehäuse 29 wird ein Fügespalt 52 gebildet, der ebenfalls eine Leckage erzeugt. Die Breite 53 des Fügespalts 52 variiert beispielsweise mit dem Durchmesser des Innengehäuses 29 und beträgt zwischen 0,4 mm und 1,2 mm. Durch diese Leckage wird auch in diesem Ausführungsbeispiel das Übersprechen zwischen den beiden Innengehäusen 29 ermöglicht. Die Abdichtung des jeweiligen inneren LSI-Krümmers 31-32 zum Gehäuse 2 wird über die Verbindung der Außenschale 35i mit dem Gehäuse 2 erreicht. Die Verbindung zwischen dem Gehäuse 2 und der Außenschale des jeweiligen LSI-Krümmers 31, 32 ist bevorzugt als Schweißverbindung ausgebildet. Alternativ hierzu ist gemäß den Figuren 5-7b eine Verbindung als Flansch 7 oder Inlay 8 oder V-Band-Schelle 6 vorgesehen.

Die in den Ausführungsbeispielen dargestellten inneren und äußeren LSI-Krümmer 30-33 sind aus Blech geformt. LSI-Blechkrümmer zeigen ein vorteilhaftes Resonanzverhalten. Durch die unterschiedliche Formgebung der inneren und der äußeren LSI-Krümmer 30-33 werden die akustischen Eigenschaften in besonderen Betriebspunkten der Brennkraftmaschine zusätzlich verbessert, weil das Schwingungs- und Resonanzverhalten harmoniert.

Der in den Figuren 8a und 8b dargestellte Abstand A2 zwischen der jeweiligen Einlassöffnung 20, 21 und der Auslassöffnung 24 ist auch von den Größenverhältnissen der jeweiligen Durchmesser De der Einlassöffnungen 20, 21 zu den Durchmessern Da der Auslassöffnung 24 abhängig. Für eine optimale akustische Anpassung an die wichtigsten Betriebspunkte der Brennkraftmaschine, insbesondere in Bezug auf die für die wichtigsten Lastbereiche maßgeblichen Drehzahlen, sind somit die Abstände A2, die Durchmesserverhältnisse De, Da und die Baugleichheit der entsprechenden Öffnungen der LSI-Krümmer 30-33 maßgeblich.

## Patentansprüche

1. Krümmersystem (1) für eine Verbrennungskraftmaschine mit
a) einem als Sammelkrümmer ausgebildeten Gehäuse (2) mit zwei Einlassöffnungen (20, 21) und mit einer Auslassöffnung (24) zur strömungstechnischen Verbindung von zwei Auslässen einer Verbrennungskraftmaschine mit einer Abgasanlage und
b) maximal zwei am Gehäuse (2) vorgesehenen Anschlussöffnungen (22, 23) zum Anschließen eines doppelschaligen inneren LSI-Krümmers (31, 32)
**dadurch gekennzeichnet, dass**
c) zumindest ein separater innerer LSI-Krümmer (31, 32) mit einer Anschlussöffnung (38i), einer Einlassöffnung (36i) und einer Auslassöffnung (37i) vorgesehen ist, der mit der Auslassöffnung (37i) an das Gehäuse (2) angeschossen ist und
d) zumindest ein separater äußerer LSI-Krümmer (30, 33) mit einer Einlassöffnung (36a) und einer Auslassöffnung (37a) vorgesehen ist, der mit der Auslassöffnung (37a) an die Anschlussöffnung (38i) des inneren LSI-Krümmers (31, 32) angeschlossen ist, und
e) alle LSI-Krümmer (30-33) vollständig aus Blech geformt sind und jeweils eine separate ein- oder mehrteilige Innenschale (34i, 34a) und jeweils eine ein- oder mehrteilige separate Außenschale (35i, 35a) aufweisen und
f) alle inneren LSI-Krümmer (31, 32) baugleich oder geometrisch identisch und alle äußeren LSI-Krümmer (30, 33) baugleich oder geometrisch identisch sind
g) wobei die inneren LSI-Krümmer (31, 32) nicht baugleich und nicht geometrisch identisch zu den äußeren LSI-Krümmern (30, 33) sind.

2. Krümmersystem (1) nach Anspruch 1,
**dadurch gekennzeichnet,**
**dass** am Gehäuse (2) das Maß eines Abstandes (A2) zwischen einer der beiden Einlassöffnungen (20, 21) und der Auslassöffnung (24) zwischen 30 mm und 300 mm oder zwischen 50 mm und 120 mm beträgt.

3. Krümmersystem (1) nach Anspruch 1 oder 2,
**dadurch gekennzeichnet,**
**dass** die beiden Einlassöffnungen (20, 21) innerhalb des Gehäuses (2) miteinander strömungstechnisch und akustisch im Austausch stehen.

4. Krümmersystem (1) nach einem der vorhergehenden Ansprüche,
**dadurch gekennzeichnet,**
**dass** das Gehäuse (2) als einteiliges Gussteil ausgebildet ist.

5. Krümmersystem (1) nach Anspruch 4,
**dadurch gekennzeichnet,**
**dass** die beiden Einlassöffnungen (20, 21) im Gehäuse (2) durch eine Kanalwand (27) getrennt sind und durch die Kanalwand (27) zwei Strömungskanäle (25, 26) gebildet sind, wobei beide Strömungskanäle (25, 26) an der Auslassöffnung (24) am Ende der Kanalwand (27) münden und die beiden Strömungskanäle (25, 26) über eine stromauf der Auslassöffnung (24) in der Kanalwand (27) vorgesehene Leckage in Form einer Öffnung (51) oder Perforation strömungstechnisch und akustisch im Austausch stehen.

6. Krümmersystem (1) nach Anspruch 5,
**dadurch gekennzeichnet,**
**dass** die Öffnung (51) oder die Perforation einen Gesamtquerschnitt zwischen 4 mm² und 500 mm² aufweist.

7. Krümmersystem (1) nach einem der Ansprüche 1 bis 3,
**dadurch gekennzeichnet,**
**dass** das Gehäuse (2) vollständig aus Blech geformt, doppelwandig sowie luftspaltisoliert mit einem ein- oder mehrteiligen Außengehäuse (28) und einem ein- oder mehrteiligen Innengehäuse (29) ausgebildet ist.

8. Krümmersystem (1) nach Anspruch 7,
**dadurch gekennzeichnet,**
**dass** das Innengehäuse (29) an den Anschlussöffnungen (22, 23) mit der Innenschale (34i) des inneren LSI-Krümmers (31, 32) an der Auslassöffnung (37i) des inneren LSI-Krümmers (31, 32) zusammengesteckt ist und dabei zwischen dem Innengehäuse (29) und der Innenschale (34i) eine Leckage in Form eines Fügespalts (52) mit einer mittleren Breite (53) zwischen 0,4 mm und 1,2 mm gebildet ist.

9. Krümmersystem (1) nach einem der vorhergehenden Ansprüche,
**dadurch gekennzeichnet,**
**dass** die äußeren LSI-Krümmer (30, 33) keine Anschlussöffnung aufweisen und bogenförmig ausgebildet sind.

10. Krümmersystem (1) nach einem der vorstehenden Ansprüche,
**dadurch gekennzeichnet,**
**dass** das Gehäuse (2) nur eine Anschlussöffnung (22) aufweist.

11. Krümmersystem (1) nach einem der vorstehenden Ansprüche,
**dadurch gekennzeichnet,**
**dass** das Gehäuse (2) die Auslassöffnungen (37i, 37a) mit einem Gehäuse eines Turboladers verbindet und hierzu ein zwischen dem Motorblock und dem Turbolader angeordnetes tragendes Bauteil bildet.

12. System bestehend aus einem Krümmersystem (1) nach einem der vorhergehenden Ansprüche und einer Brennkraftmaschine.

## Claims

1. A manifold system (1) for an internal combustion engine, having
a) a housing (2), which is designed as a collecting manifold and which has two inlet openings (20, 21) and an outlet opening (24) for the fluidic connection of two outlets of an internal combustion engine to an exhaust system, and
b) at most two connection openings (22, 23) provided on the housing (2) for connecting a double-shell inner air-gap-insulated manifold (31, 32),
**characterised in that**
c) at least one separate inner air-gap-insulated manifold (31, 32) having a connection opening (38i), an inlet opening (36i) and an outlet opening (37i) is provided, which is connected to the housing (2) by means of the outlet opening (37i), and
d) at least one separate outer air-gap-insulated manifold (30, 33) having an inlet opening (36a) and an outlet opening (37a) is provided, which is connected to the connection opening (38i) of the inner air-gap-insulated manifold (31, 32) by means of the outlet opening (37a), and
e) all air-gap-insulated manifolds (30-33) are completely formed of sheet metal, and each air-gap-insulated manifold has a separate one- or multi-part inner shell (34i, 34a) and a one- or multi-part separate outer shell (35i, 35a), and
f) all inner air-gap-insulated manifolds (31, 32) are structurally or geometrically identical and all outer air-gap-insulated manifolds (30, 33) are structurally or geometrically identical,
g) wherein the inner air-gap-insulated manifolds (31, 32) are not structurally identical and not geometrically identical to the outer air-gap-insulated manifolds (30, 33).

2. The manifold system (1) according to Claim 1,
**characterised in that**
the dimension of a distance (A2) on the housing (2) between one of the two inlet openings (20, 21) and the outlet opening (24) is between 30 mm and 300 mm or between 50 mm and 120 mm.

3. The manifold system (1) according to Claim 1 or 2,
**characterised in that**
the two inlet openings (20, 21) are in a fluidic and acoustic exchange with each other within the housing (2).

4. The manifold system (1) according to any one of the preceding claims,
**characterised in that**
the housing (2) is designed as a one-part casting.

5. The manifold system (1) according to Claim 4,
**characterised in that**
the two inlet openings (20, 21) in the housing (2) are separated by a duct wall (27) and two flow ducts (25, 26) are formed by the duct wall (27), wherein both flow ducts (25, 26) open out at the outlet opening (24) at the end of the duct wall (27) and the two flow ducts (25, 26) are in a fluidic and acoustic exchange via a leakage in the form of an opening (51) or perforation provided upstream of the outlet opening (24) in the duct wall (27).

6. The manifold system (1) according to Claim 5,
**characterised in that**
the opening (51) or the perforation has a total cross-section between 4 mm² and 500 mm².

7. The manifold system (1) according to any one of Claims 1 to 3,
**characterised in that**
the housing (2) is completely formed of sheet metal, is double-walled as well as air-gap insulated with a one- or multi-part outer housing (28) and a one- or multi-part inner housing (29).

8. The manifold system (1) according to Claim 7,
**characterised in that**
the inner housing (29) at the connection openings (22, 23) is mated with the inner shell (34i) of the inner air-gap-insulated manifold (31, 32) at the outlet opening (37i) of the inner air-gap-insulated manifold (31, 32) and a leakage in the form of a joint gap (52) having an average width (53) between 0.4 mm and 1.2 mm is thereby formed between the inner housing (29) and the inner shell (34i).

9. The manifold system (1) according to any one of the preceding claims,
**characterised in that**
the outer air-gap-insulated manifolds (30, 33) do not have a connection opening and are configured in the form of an arc.

10. The manifold system (1) according to any one of the preceding claims,
**characterised in that**
the housing (2) has only one connection opening (22).

11. The manifold system (1) according to any one of the preceding claims,
**characterised in that**
the housing (2) connects the outlet openings (37i, 37a) to a housing of a turbocharger and, for this purpose, forms a load-bearing component arranged between the engine block and the turbocharger.

12. A system consisting of a manifold system (1) according to any one of the preceding claims and an internal combustion engine.

## Revendications

1. Système collecteur (1) pour un moteur à combustion interne avec
a) un carter (2) formé comme un collecteur avec deux ouvertures d'admission (20, 21) et avec une ouverture de sortie (24) pour la liaison fluidique de deux sorties d'un moteur à combustion interne avec un système d'échappement et
b) au maximum deux ouvertures de raccordement (22, 23) prévues sur le carter (2) pour le raccordement d'un collecteur LSI interne à double coque (31, 32)
**caractérisé en ce que**
c) au moins un collecteur LSI intérieur (31, 32) séparé est prévu avec une ouverture de raccordement (38i), une ouverture d'admission (36i) et une ouverture de sortie (37i), lequel est raccordé au carter (2) par l'ouverture de sortie (37i), et
d) au moins un collecteur LSI extérieur (30, 33) séparé est prévu avec une ouverture d'admission (36a) et une ouverture de sortie (37a), lequel est raccordé à l'ouverture de raccordement (38i) du collecteur LSI intérieur (31, 32) par l'ouverture de sortie (37a), et
e) tous les collecteurs LSI (30-33) sont entièrement formés en tôle et présentent respectivement une coque intérieure séparée en une ou plusieurs parties (34i, 34a) et respectivement une coque extérieure séparée en une ou plusieurs parties (35i, 35a), et
f) tous les collecteurs LSI intérieurs (31, 32) sont de même construction ou géométriquement identiques et tous les collecteurs LSI extérieurs (30, 33) sont de même construction ou géométriquement identiques,
g) les collecteurs LSI intérieurs (31, 32) ne sont pas de même construction que les collecteurs LSI extérieurs (30, 33), ou ne sont pas géométriquement identiques à ceux-ci.

2. Système collecteur (1) selon la revendication 1,
**caractérisé en ce que**
sur le carter (2), la cote d'une distance (A2) entre l'une des deux ouvertures d'admission (20, 21) et l'ouverture de sortie (24) est comprise entre 30 mm et 300 mm ou entre 50 mm et 120 mm.

3. Système collecteur (1) selon la revendication 1 ou 2,
**caractérisé en ce que**
les deux ouvertures d'admission (20, 21) à l'intérieur du carter (2) sont en communication l'une avec l'autre sur les plans fluidique et acoustique.

4. Système collecteur (1) selon l'une quelconque des revendications précédentes,
**caractérisé en ce que**
le carter (2) est formé comme une pièce moulée monobloc.

5. Système collecteur (1) selon la revendication 4,
**caractérisé en ce que**
les deux ouvertures d'admission (20, 21) sont séparées par une paroi de canal (27) dans le carter (2) et deux canaux d'écoulement (25, 26) sont formés par la paroi de canal (27), les deux canaux d'écoulement (25, 26) débouchant à l'ouverture de sortie (24) à l'extrémité de la paroi de canal (27) et les deux canaux d'écoulement (25, 26) étant en communication sur les plans fluidique et acoustique par une fuite prévue en amont de l'ouverture de sortie (24) dans la paroi de canal (27) sous la forme d'une ouverture (51) ou d'une perforation.

6. Système collecteur (1) selon la revendication 5,
**caractérisé en ce que**
l'ouverture (51) ou la perforation présentent une section transversale totale entre 4 mm² et 500 mm².

7. Système collecteur (1) selon l'une des revendications 1 à 3,
**caractérisé en ce que**
le carter (2) est formé entièrement en tôle, à double paroi ainsi qu'isolé par couche d'air avec un carter extérieur (28) en une ou plusieurs parties et avec un carter intérieur (29) en une ou plusieurs parties.

8. Système collecteur (1) selon la revendication 7,
**caractérisé en ce que**
le carter intérieur (29) est assemblé par emboîtement aux ouvertures de raccordement (22, 23) avec la coque intérieure (34i) du collecteur LSI intérieur (31, 32) à l'ouverture d'admission (37i) du collecteur LSI intérieur (31, 32) et une fuite sous la forme d'une fente de jointure est formée ici entre le carter intérieur (29) et la coque intérieure (34i), avec une largeur moyenne (53) entre 0,4 mm et 1,2 mm.

9. Système collecteur (1) selon l'une quelconque des revendications précédentes,
**caractérisé en ce que**
les collecteurs LSI extérieurs (30, 33) ne présentent pas d'ouverture de raccordement et sont formés en arc.

10. Système collecteur (1) selon l'une quelconque des revendications précédentes,
**caractérisé en ce que**
le carter (2) ne présente qu'une seule ouverture de raccordement (22).

11. Système collecteur (1) selon l'une quelconque des revendications précédentes,
**caractérisé en ce que**
le carter (2) relie les ouvertures de sortie (37i, 37a) avec un carter d'un turbocompresseur et forme ici un composant porteur disposé entre le bloc moteur et le turbocompresseur.

12. Système se composant d'un système collecteur (1) selon l'une quelconque des revendications précédentes et d'un moteur à combustion interne.
